# EUROPÄISCHE PATENTSCHRIFT

(11) **EP 2 490 417 B1**
(45) Veröffentlichungstag und Bekanntmachung des Hinweises auf die Patenterteilung: **21.12.2016**
(21) Anmeldenummer: 11155058.8
(22) Anmeldetag: 18.02.2011
(51) Int. Cl.: H04M 1/60, H04M 1/725

(54) **Vorrichtung zum freisprechenden Telefonieren**
Device for hands-free telephony
Dispositif de téléphonie sans fil

(43) Veröffentlichungstag der Anmeldung: 22.08.2012
(73) Patentinhaber: Gigaset Communications GmbH, 40549 Düsseldorf (DE)
(72) Erfinder: Euscher, Christoph, 46414, Rhede (DE)
(74) Vertreter: Michalski Hüttermann & Partner Patentanwälte mbB

(56) Entgegenhaltungen:
- EP-A2- 0 736 992
- WO-A1-2009/080704
- WO-A1-2009/153684
- US-A1- 2003 210 770

## Beschreibung

Die Erfindung betrifft eine Vorrichtung zum komfortablen freisprechenden Telefonieren, bei welcher ein Benutzer nicht durch Hörer oder Headsets in seiner Bewegungs- und/oder Komfortsituation eingeschränkt wird und die ihm zudem ein großes Maß an (innerhäuslicher) Mobilität ermöglicht.

Freisprechendes oder auch Handsfree Telefonieren ist seit geraumer Zeit und in verschiedenen Ausführungen bekannt, um dem Benutzer während des Telefonierens die Möglichkeit einzuräumen, gleichzeitig zum Telefonat andere Tätigkeiten verrichten zu können. In vielen Kommunikationssituationen ist es erforderlich, über beide Hände frei Verfügen zu können, sei es, um beispielsweise in einem Call Center parallel zum Telefonat eine Computertatstatur zu verwenden, um im Haushalt Hausarbeiten zu verrichten oder ganz allgemein anderen Tätigkeiten nachzugehen.

Bekannte Lösungen für Handsfree Telefonieren sind das Headset und der Freisprechmodus üblicher Telefone. Diese sind mit diversen Nachteilen behaftet. Headsets, sowohl in Form von Kopfhörern als auch im oder auf dem Ohr getragene, bedingen als Fremdkörper am Kopf in jedem Fall ein gewisses Maß an Unbequemlichkeit.

Eine Alternative ist mit dem bekannten Freisprechmodus am Telefon gegeben, bei welchem die Sprache des Gesprächspartners nicht über die Hörmuschel, sondern über einen Lautsprecher wiedergegeben wird. Für die Aufnahme der Stimme des Freisprechenden wird dabei entweder das Mikrofon des Hörers oder ein zweites, fest in einem Tischgerät installiertes Mikrofon verwendet. Für Konferenzgespräche sind auch separate Mikrofone wie beispielsweise der Konferenzstern bekannt.

Bei diesen Lösungen kann über Mechanismen zur Echo- und Rückkoppelungsunterdrückung verhindert werden, dass die wiedergegebene Sprache vom Mikrofon des Telefons in störender Weise wieder aufgenommen und übertragen wird. Dies geschieht zumeist nur unvollkommen, welches insbesondere ersichtlich wird, wenn beide Teilnehmer Freisprechsysteme verwenden. Desweiteren leidet die Gesprächsqualität meist darunter, dass die eigene Positionierung zum Mikrofon nicht ideal ist. Dabei kann dieses Problem bekannter Weise durch ein zusätzliches, beispielsweise am Kragen getragenes Mikrofon überwunden werden.

Ein solches System wird in der EP 2 260 638 A1 beschrieben, bei welcher während eines bestehenden Telefonats durch einen einfachen Knopfdruck ein zusätzlich am Revers getragenes Mikrofon hinzu geschaltet wird, sodass sich der Benutzer frei bewegen kann.

Entscheidend ist aber der Lösungsbereich der EP 2 260 638 A1 durch das Zuschalten eines Mikrofons auf einen gewissen räumlichen Bereich begrenzt. Der Benutzer, der seinen Gesprächsteilnehmer aus dem Lautsprecher des Gerätes wahrnimmt, ist in seiner Bewegungsfreiheit eingeschränkt, welche durch die Lautstärke der Sprachwiedergabe und der damit einhergehenden akustischen Reichweite des Telefonlautsprechers gegeben ist.

Der Erfindung liegt daher die Aufgabe zu Grunde, eine Vorrichtung anzugeben, die komfortables freisprechendes Telefonieren ermöglicht, bei welcher der Benutzer insbesondere nicht in seiner Bewegungs- und Komfortsituation eingeschränkt ist und die ihm gleichzeitig ein großes Maß an Mobilität bietet, so dass es die vorgenannten Nachteile der bekannten Verfahren vermeidet.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist damit ein Kommunikationssystem zum freisprechenden Telefonieren laut den Merkmalen der unabhängigen Ansprüche vorgesehen.

Bevorzugte Ausführungen sind den abhängigen Ansprüche zu entnehmen.

Der Vorteil dieser Lösung liegt darin, dass der Benutzer in seiner Mobilität nicht an eine räumliche Nähe, sozusagen Hörweite, eines Lautsprechers oder eines fest installierten Mikrofones gebunden ist.

Durch die Befestigung der Einrichtung 1 am Körper des Benutzers sind ortsunabhängig sehr gute Bedingungen zur Aufnahme der Sprache des Benutzers, des Hinkanals, gegeben. In einer vorteilhaften Ausführung kann die Mikrofoneinrichtung die Funktion eines schnurlosen Mikrofons ausüben. Für die Wiedergabe des vom Gesprächspartners Gesprochenem, dem Rückkanal, stehen mehrere Lautsprecher zur Verfügung, von denen bevorzugt nur eine Auswahl den Rückkanal wiedergibt. Ein wesentlicher Vorteil durch das Treffen einer Auswahl an Lautsprechern ist darin begründet, dass eine mögliche Belästigung möglicher weiterer, am Gespräch unbeteiligter Personen vermieden wird. Desweiteren wird eine Verletzung der Privatsphäre der Telefonierenden vermieden, insbesondere für den Fall, dass ein solches Kommunikationssystem über eine Vielzahl von Räumen, möglicherweise einem Firmenkomplex, installiert ist.

Vorteilhaft wird diese Auswahl nicht starr festgelegt, sondern variabel gehalten. Während der Dauer eines Telefongesprächs könnte die Notwendigkeit bestehen, dass der Benutzer den Raum und somit den Bereich, in dem der über einen Lautsprecher wiedergegebenen Rückkanal wahrnehmbar ist, verlässt. In diesem Fall wird vorteilhaft ein anderer Lautsprecher aktiviert, welcher ebenfalls am Körper getragen wird, oder welcher sich in dem neu betretenen Raum befindet. Dabei kann es durchaus vorgesehen sein, dass zu einem Zeitpunkt mehrere Lautsprecher den Rückkanal wiedergeben. Nicht immer wird es eindeutig bestimmbar sein, welches der im jeweiligen Zeitpunkt ideale Lautsprecher ist, ebenso mag der Benutzer bei häufiger Positionsänderung es angenehmer empfinden, trotz einer Hin- und Herbewegung den Rückkanal gleichermaßen aus mehreren Lautsprechern wahrnehmen zu können. Eine entsprechende Steuerung der Lautsprecherauswahl kann daher vorteilhaft eine gewisse Hysterese aufweisen.

Bei der Auswahl, welche Lautsprecher den Rückkanal wiedergeben, wird vorteilhaft das Kriterium der räumlichen Nähe zum Benutzer herangezogen, d.h. vorteilhaft werden nur diejenigen Lautsprecher aktiviert, die in der Nähe des Benutzers angeordnet sind.

Räumliche Nähe ist bis zu einer solchen Entfernung gegeben, bis zu der von einem Lautsprecher mit in etwa Zimmerlautstärke wiedergegebene Sprachinformation von dem Benutzer noch verstanden werden kann.

Dabei wird die räumliche Nähe vorteilhafterweise durch die Auswertung von akustischen oder Feldstärkemessungen erfasst. Der von der als Schnurloses Mikrofon arbeitende Mikrofoneinrichtung 1 aufgenommene Hinkanal wird über einen Funkkanal an die (zentrale) Kommunikationsstation gesendet. Die Feldstärke dieser Funknachricht ist von den Lautsprechern des Kommunikationssystems, welche vorteilhaft durch eine Sende-/Empfangseinrichtung über Funk mit der (zentralen) Kommunikationsstation in Verbindung stehen können, messbar, sodass aus der Höhe einer von der Lautsprechereinrichtung gemessenen Empfangsfeldstärke eine Distanz der Mikrofoneinrichtung zur Lautsprechereinrichtung abgeleitet werden kann. Vorteilhaft könnte ein Schwellwert definiert werden, ab dem eine Lautsprechereinrichtung die Nähe einer Mikrofoneinrichtung erkennt. Auf diese Detektion hin könnte sich die Lautsprechereinrichtung selbsttätig zu oder abschalten.

Alternativ kann räumliche Nähe auch durch akustische Messungen festgestellt werden. Ein Geräuschsensor in der Lautsprechereinrichtung könnte die gesprochene Sprache detektieren und die Lautsprechereinrichtung daraufhin aktivieren.

Dabei ist jedoch nicht zweifelsfrei eindeutig, dass die vom Geräuschsensor detektierte gesprochene Sprache einem bestimmten Telefonat zuzuordnen ist, sodass es vorteilhaft ist, die vom Sensor detektierte Sprache mit der im Hinkanal übertragenen Sprache zu korrelieren, um Fehlzuschaltungen zu vermeiden.

Diese Problematik existiert bei der Auswertung der Feldstärke, mit welcher der Funkkanal der Mikrofoneinrichtung empfangen werden kann, nicht, da aus der Kanalstruktur, zum Beispiel im Falle von DECT, oder aus Parametern der Funknachricht der richtige Rückkanal abgeleitet werden kann.

Die Auswertung der Feldstärke, mit welcher der Funkkanal der Mikrofoneinrichtung empfangen werden kann, empfiehlt sich daher besonders, wenn das System eine Vielzahl von Mikrofoneinrichtungen und/oder mehrere aktive Freisprechverbindungen aufweist.

Alternativ zu einer autarken Entscheidung der Lautsprechereinrichtung(en) können die Lautsprechereinrichtungen auch zentral von einer Kontroll- oder Auswerteeinrichtung zu- oder abgeschaltet werden. Dazu werden vorteilhaft Messwerte von den im Kommunikationssystem befindlichen Einrichtungen, d.h. Mikrofoneinrichtungen, Lautsprechereinrichtungen oder Mobilteile an die Kontroll- oder Auswerteeinrichtung gesendet. Vorteilhaft enthalten die Messwerte die Feldstärken von im System befindlichen Mikrofoneinrichtungen, sodass in der Kontrolleinheit eine gute Ortsbestimmung, zum Beispiel durch Triangulation, möglich wird und somit eine gute Auswahl zuschaltbarer Lautsprechereinrichtungen treffbar ist. Die Kontroll- oder Auswerteeinrichtung kann vorteilhaft in der zentralen Kommunikationsstation angeordnet sein. Sie kann aber auch mehrfach implementiert in jeder Lautsprechereinrichtung vorhanden sein.

Ein Vorteil einer zentralen Kontroll- oder Auswerteeinrichtung besteht darin, dass diese verhindern kann, dass zu einem Zeitpunkt sämtliche Lautsprechereinrichtungen gleichzeitig abschalten. Sie könnte veranlassen, dass für den Fall, dass sich keine Lautsprechervorrichtung in der Nähe befindet, ein zusätzlicher Lautsprecher an der Mikrofoneinrichtung zumindest vorübergehend aktiviert wird.

Vorteilhaft kann die Messung der Feldstärke, mit welcher der Funkkanal der Mikrofoneinrichtung empfangen werden kann, auch genutzt werden, um den Lautstärkepegel, mit welcher der Lautsprecher den Rückkanal wiedergibt, zu regulieren. Entfernt sich der Benutzer von einer Lautsprechereinrichtung, so ist dies an fallenden Feldstärkewerten erkennbar. Mit zunehmender Distanz der Mikrofoneinrichtung zur Lautsprechereinrichtung sinkt die Empfangsfeldstärke. Die sinkende Empfangsfeldstärke kann als ein Kriterium genutzt werden, den Wiedergabepegel des Rückkanals anzuheben, damit der sich entfernende Benutzer den Rückkanal weiterhin gut wahrnehmen kann. Dementsprechend kann der Wiedergabepegel gesenkt werden, wenn sich der Benutzer der Lautsprechereinrichtung nähert. Dieser Vorteil der Erfindung ist insbesondere dann von Bedeutung, wenn sich ein Benutzer in Bewegung durch mehrere Räume befindet und die Abstände zwischen den Lautsprechereinrichtungen groß sind. In diesem Fall würde eine im Vorbeigehen passierte erste Lautsprechereinrichtung ihre Lautstärke erhöhen. Bei Annäherung zu einer zweiten Lautsprechereinrichtung würde diese ebenfalls aktiviert. Zwischen den beiden Lautsprecheinrichtungen ist der Rückkanal aus beiden Lautsprechereinrichtungen wahrzunehmen. Bei weiterer Bewegung in Richtung der zweiten Lautsprechereinrichtung schaltet die erste, nicht mehr oder zumindest schlechter wahrnehmbare Lautsprechereinrichtung ab.

Vorteilhaft weist die Auswahl zu einer Mikrofoneinrichtung zumindest eine standardmäßig zugewiesene Lautsprechereinrichtung auf. Damit wird in einfachen Systemen, welche keine Kontroll- oder Auswerteeinrichtung aufweisen, verhindert, dass keine der im System befindlichen Lautsprechereinrichtungen den Rückkanal wiedergibt. Vorteilhafterweise kann es sich bei dem einen aktivierten Lautsprecher um einen Lautsprecher an der Mikrofoneinrichtung handeln.

Alternativ ist es vorteilhaft, wenn die Mikrofoneinrichtung in der im Hinkanal eine Information übermittelt, aus der die Auswahl mindestens einer Lautsprechereinrichtung hervorgeht. Üblicherweise wird in Kommunikationssystemen mit Adressen gearbeitet, anhand derer die verschiedenen Teilnehmer des Kommunikationsystems, d.h. die Mikrofoneinrichtungen, die Lautsprechereinrichtungen sowie weitere Mobilteile individuell adressierbar sind. Vorteilhaft beinhaltet die von der Mikrofoneinrichtung im Hinkanal übermittelte Information daher eine zu einer Lautsprechereinrichtung gehörende Adressinformation, sodass Mikrofoneinrichtungs- und Lautsprechereinrichtungspaare gebildet werden können. Dabei ist es alternativ zur Übertragung einer Information zur Adressierung einer Lautsprechereinrichtung auch möglich, dass die (zentrale) Kommunikationsstation relativ zur Adresse der Mikrofoneinrichtung eine Lautsprechereinrichtung auswählt, oder dass in der (zentralen) Kommunikationsstation eine feste Zuordnung einer Lautsprechereinrichtung zu der Adresse, z.B. bei DECT der IPUI (International Portable User Identity), oder der internen Teilnehmernummer, über welche der Benutzer eine Mikrofoneinrichtung oder ein Mobilteil anwählt, der Mikrofoneinrichtung gegeben ist.

Nachfolgend wird die Erfindung unter Bezugnahme auf die anliegende Zeichnung anhand einer bevorzugten Ausführungsform näher erläutert.

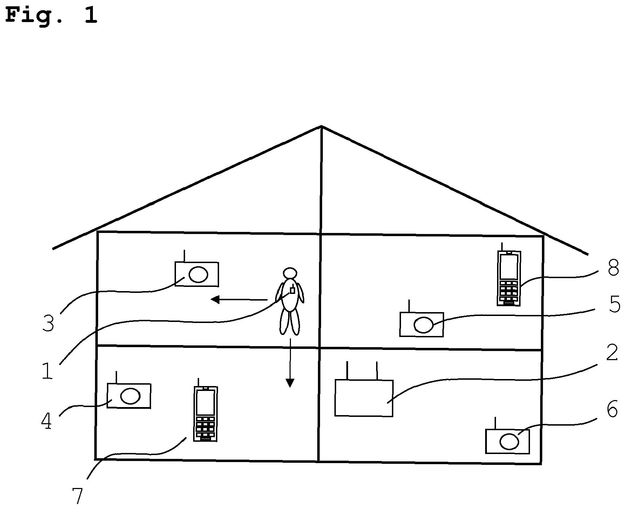

Es zeigt
- Fig. 1: ein Ausführungsbeispiel des erfindungsgemäßen Kommunikationssystems

Fig. 1 zeigt ein Gebäude mit Komponenten des erfindungsgemäßen Kommunikationssystems. Es sind vier Raume skizziert, innerhalb derer je eine Lautsprechereinrichtung 3, 4, 5, 6 installiert ist. Ein Benutzer trägt eine Mikrofoneinrichtung 1. Desweiteren sind zwei schnurlose Telefone oder auch Mobilteile 7 und 8 dargestellt. Sämtliche Komponenten sind schnurlos mit der zentralen Kommunikationsstation 2 verbunden. Diese verbindet nicht dargestellt das Kommunikationssystem mit dem Telefonnetz und/oder Internet. Als schnurloser Übertragungsstandard ist DECT geeignet. Die beiden Mobilteile 7 und 8 bilden in Verbindung mit der zentralen Kommunikationsstation ein handelsübliches Schnurlostelefonsystem. Die Lausprechereinrichtungen 3, 4, 5, 6 sowie die Mikrofoneinrichtung 1 stellen aus Sicht des DECT-Standards Mobilteile dar. DECT bietet als Time Division Duplex System je 12 aufeinanderfolgende Zeitschlitze zur Übertragung der Daten des Hin- und des Rückkanals. Die Mikrofoneinrichtung 1 verwendet ein Zeitschlitzpaar zur Übertragung des Hinsowie optional, bei an der Mikrofoneinrichtung zusätzlich vorhandenem Lautsprecher - des Rückkanals. Bei der Implementierung des Systems können die Lautsprechereinrichtungen 3, 4, 5, 6 wahlweise den Zeitschlitz des Rückkanals mithören oder - da dies zum Beispiel im Falle aktiver Verschlüsselung schwer zu bewerkstelligen ist - einen eigenen Zeitschlitz für den Rückkanal zugewiesen bekommen. Sämtliche Teilnehmer des Kommunikationssystems sind auf die Zeitrahmenstruktur der zentralen Kommunikationsstation synchronisiert, was ein Messen der Feldstärkewerte erleichtert.

In der dargestellten Situation in Fig. 1 bewegt sich der Benutzer zunächst im Raum oben links. Während dieser Phase wird der Rückkanal nur durch die Lautsprechereinrichtung 3 wiedergegeben, alle übrigen Lautersprechereinrichtungen sowie die Lautsprecher der Mobilteile sind inaktiv. Gegebenenfalls wird der Wiedergabepegel des Rückkanals von der Lautsprechereinrichtung reguliert, d.h. gesenkt, sofern sich der Benutzer dem Lautsprecher nähert, bzw. angehoben, sofern er sich entfernt.

In einer zweiten Phase verlässt der Benutzer den oberen Raum und begibt sich in den darunterliegenden.

In dem darunterliegenden Raum erkennt die Lautsprechereinrichtung 4 zu einem bestimmten Zeitpunkt, dass sie die Mikrofoneinrichtung 1 mit einer über einem bestimmten Schwellwert liegenden Feldstärke empfangen kann. Damit detektiert sie die "räumliche Nähe" der Mikrofoneinrichtung 1. Sie empfängt den von der zentralen Kommunikationsstation versendeten Rückkanal und gibt ihn über den Lautsprecher wieder.

Mit zunehmender Entfernung des Benutzers zum oberen Raum sinkt die Feldstärke, mit der die Lautsprechereinrichtung 3 den Hinkanal der Mikrofoneinrichtung empfangen kann. Ab einem bestimmten Zeitpunkt, ab dem die Feldstärke einen Schwellwert unterschreitet, schaltet die Lautsprechereinrichtung 3 die Wiedergabe des Rückkanals ab.

### Bezugszeichenliste

| | |
|---|---|
| Mikrofoneinrichtung | 1 |
| Kommunikationsstation / Basisstation | 2 |
| Lautsprechereinrichtung | 3, 4, 5, 6 |
| Schnurlose Telefone / Mobilteile | 7, 8 |

## Patentansprüche

1. Kommunikationssystem, aufweisend eine vorzugsweise zentrale Kommunikationsstation (2), welche Kommunikationskanäle zwischen mehreren Teilnehmern oder wenigstens einem Teilnehmer und einem Kommunikationsnetz herstellen kann, wobei ein Kommunikationskanal jeweils aus einem Hin- und einem Rückkanal besteht, aufweisend wenigstens eine Mikrofoneinrichtung (1), die schnurlos ist, wobei die Mikrofoneinrichtung (1) einen Sendekanal zu der Kommunikationsstation (2) zur Übertragung des Hinkanals aufbauen kann und aufweisend mehrere Lautsprechereinrichtungen (3, 4, 5, 6) zur Wiedergabe eines Rückkanals,
**dadurch gekennzeichnet, dass** der Rückkanal über eine Auswahl von Lautsprechereinrichtungen (3, 4, 5, 6) gleichzeitig wiedergeben werden kann, wobei die Auswahl (3, 4) nur diejenigen Lautsprechereinrichtungen umfasst, die sich in räumlicher Nähe zur Mikrofoneinrichtung (1) befinden.

2. Kommunikationssystem nach Anspruch 1 **dadurch gekennzeichnet, dass** zur Verhinderung, dass keine der im Kommunikationssystem befindlichen Lautsprechereinrichtungen (3, 4, 5, 6) den Rückkanal wiedergibt,
a) die Auswahl zumindest eine standardmäßig zu der Mikrofoneinrichtung (1) zugewiesene Lautsprechereinrichtung aufweist (3, 4, 5, 6),
oder
b) die Mikrofoneinrichtung (1) in ihrem Hinkanal zur Übertragung von Information eingerichtet ist, aus der die Auswahl wenigstens einer Lautsprechereinrichtung (3, 4, 5, 6) hervorgeht oder ableitbar ist,
und/oder
c) zur Auswahl mindestens einer Lautsprechereinrichtung (3, 4, 5, 6) in der Kommunikationsstation (2) aus der Adresse der Mikrofoneinrichtung (1) wenigstens die Adresse einer Lautsprechereinrichtung (3, 4, 5, 6) relativ ableitbar ist
und/oder
d) die Auswahl mindestens einer Lautsprechereinrichtung (3, 4, 5, 6) in der Kommunikationsstation (2) durch die feste Zuordnung mindestens einer Lautsprechereinrichtung (3,4,5,6) zu einer individuellen Kennung der Mikrofoneinrichtung (1) z.B. der IPUI oder einer Teilnehmernummer gegeben ist.

3. Kommunikationssystem nach einem der vorherigen Ansprüche **dadurch gekennzeichnet, dass** die räumliche Nähe durch Feldstärkemessung erfassbar und/oder durch Auswertung akustischer Messung erfassbar ist.

4. Kommunikationssystem nach Anspruch 3 **dadurch gekennzeichnet, dass** die Feldstärke des Sendekanals der Mikrofoneinrichtung (1) durch die Kommunikationsstation (2) und/oder eine Lautsprechersprecheinrichtung (3, 4, 5, 6) und/oder weitere Mobilteile (7, 8) messbar ist.

5. Kommunikationssystem nach den Ansprüchen 3 oder 4
**dadurch gekennzeichnet, dass** räumliche Nähe durch Überschreiten eines vorgegebenen Feldstärkewertes detektierbar ist.

6. Kommunikationssystem nach einem der vorherigen Ansprüche
**dadurch gekennzeichnet, dass** das Kommunikationssystem (2) eine Kontrolleinrichtung oder Auswerteeinrichtung aufweist, welche über die Auswahl der Lautsprechereinrichtungen (3, 4, 5, 6) entscheidet, welche zentral oder dezentral in einer zentralen Kommunikations-/Basisstation (2) oder in jeder einzelnen Lautsprechereinrichtung (3, 4, 5, 6) angeordnet ist.

7. Kommunikationssystem nach Anspruch 6 **dadurch gekennzeichnet, dass** durch die Kontrolleinrichtung oder Auswerteeinrichtung die Auswahl der Lautsprechereinrichtungen (3, 4, 5, 6) anhand übermittelbarer Messwerte von im Kommunikationssystem befindlichen Messvorrichtungen treffbar ist, wobei als Messvorrichtung wenigstens eine Lautsprechereinrichtung (3, 4, 5, 6) und/oder wenigstens ein Mobilteil (7, 8) und/oder wenigstens eine Mikrofoneinrichtung (1) verwendbar ist.

8. Kommunikationssystem nach einem der vorherigen Ansprüche
**dadurch gekennzeichnet, dass** der Wiedergabepegel des Rückkanals an der Lautsprechereinrichtung (3, 4, 5, 6) abhängig von der räumlichen Nähe der Mikrofoneinrichtung (1) zur Lautsprechereinrichtung (3, 4, 5, 6) automatisch einstellbar ist.

9. Kommunikationssystem nach einem der vorherigen Ansprüche
**dadurch gekennzeichnet, dass** die Mikrofoneinrichtung (1) sowohl die Eigenschaft eines schnurlosen Mikrofons als auch einen Lautsprecher zur Wiedergabe eines Rückkanals aufweist.

10. Kommunikationssystem nach Anspruch 9, **dadurch gekennzeichnet, dass** es eine Kontrolleinrichtung oder Auswerteeinrichtung aufweist, die veranlasst, dass für den Fall, dass für keine Lautsprechervorrichtung (3, 4, 5, 6) eine räumliche Nähe festgestellt wird, der Lautsprecher an der Mikrofoneinrichtung (1) zumindest vorübergehend aktiviert wird.

11. Verfahren in einem Kommunikationssystem, wobei das Kommunikationssystem eine vorzugsweise zentrale Kommunikationsstation (2) aufweist, welche Kommunikationskanäle zwischen mehreren Teilnehmern oder wenigstens einem Teilnehmer und einem Kommunikationsnetz herstellen kann, wobei ein Kommunikationskanal jeweils aus einem Hin- und einem Rückkanal besteht, wobei das Kommunikationssystem ferner wenigstens eine Mikrofoneinrichtung (1) aufweist, die schnurlos ist, wobei die Mikrofoneinrichtung (1) einen Sendekanal zu der Kommunikationsstation (2) zur Übertragung des Hinkanals aufbauen kann und wobei das Kommunikationssystem mehrere Lautsprechereinrichtungen (3, 4, 5, 6) zur Wiedergabe eines Rückkanals aufweist,
**dadurch gekennzeichnet, dass**
der Rückkanal über eine Auswahl von Lautsprechereinrichtungen (3, 4, 5, 6) gleichzeitig wiedergeben wird, wobei die Auswahl (3, 4) nur diejenigen Lautsprechereinrichtungen (3, 4, 5, 6) umfasst, die sich in räumlicher Nähe zur Mikrofoneinrichtung (1) befinden.

12. Verfahren nach Anspruch 11, **dadurch gekennzeichnet, dass** mit zunehmender Distanz der Mikrofoneinrichtung (1) zur Lautsprechereinrichtung (3, 4, 5, 6) der Wiedergabepegel des Rückkanals angehoben wird.

13. Verfahren nach Anspruch 11, **dadurch gekennzeichnet, dass** mit abnehmender Distanz der Mikrofoneinrichtung (1) zur Lautsprechereinrichtung (3, 4, 5, 6) der Wiedergabepegel des Rückkanals gesenkt wird.

14. Verfahren nach einem der Ansprüche 11 bis 13, **dadurch gekennzeichnet, dass**
1. der Rückkanal in einer ersten Phase über eine erste Lautsprechereinrichtung (3, 4, 5, 6) wiedergegeben wird,
2.bei Annäherung der Mikrofoneinrichtung (1) an eine zweite Lautsprechereinrichtung (3, 4, 5, 6) diese in einer zweiten Phase ebenfalls aktiviert wird, sodass zwischen den beiden Lautsprecheinrichtungen (3, 4, 5, 6) der Rückkanal aus beiden Lautsprechereinrichtungen (3, 4, 5, 6) wahrzunehmen ist,
3.bei weiterer Bewegung in Richtung der zweiten Lautsprechereinrichtung (3, 4, 5, 6) der Rückkanal über die erste, nicht mehr oder zumindest schlechter wahrnehmbare Lautsprechereinrichtung (3, 4, 5, 6), nicht mehr wiedergegeben wird.

15. Verfahren nach einem der Ansprüche 11 bis 14, **dadurch gekennzeichnet, dass** die Messung der Feldstärke, mit welcher der Sendekanal der Mikrofoneinrichtung (1) empfangen werden kann, genutzt wird, um den Wiedergabepegel des Rückkanals zu regulieren.

## Claims

1. A communication system, comprising a preferably central communication station (2), which can establish communication channels between a plurality of subscribers or at least one subscriber and a communication network, wherein each communication channel consists of an outward channel and a return channel, comprising at least one microphone device (1) which is cordless, wherein the microphone device (1) can set up a transmission channel to the communication station (2) for transmission of the outward channel, and comprising a plurality of loudspeaker devices (3, 4, 5, 6) for reproduction of a return channel, **characterised in that** the return channel can be reproduced simultaneously via a selection of loudspeaker devices (3, 4, 5, 6), wherein the selection (3, 4) comprises only those loudspeaker devices which are disposed in the spatial vicinity of the microphone device (1).

2. The communication system according to claim 1, **characterised in that**, in order to prevent a situation in which none of the loudspeaker devices (3, 4, 5, 6) disposed in the communication system reproduces the return cannel,
a) the selection comprises at least one loudspeaker device (3, 4, 5, 6) assigned as standard to the microphone device (1),
or
b) the microphone device (1) is designed to transmit information in its outward channel, on the basis of which information the selection of at least one loudspeaker device (3, 4, 5, 6) is provided or can be deduced,
and/or
c) in order to select at least one loudspeaker device (3, 4, 5, 6) in the communication station (2), at least the address of a loudspeaker device (3, 4, 5, 6) can be derived in a relative manner from the address of the microphone device (1),
and/or
d) the selection of at least one loudspeaker device (3, 4, 5, 6) in the communication station (2) is given by the fixed assignment of at least one loudspeaker device (3, 4, 5, 6) to an individual identifier of the microphone device (1), for example the IPUI or a subscriber number.

3. The communication system according to either one of the preceding claims, **characterised in that** the spatial vicinity can be determined by field-strength measurement and/or can be determined by evaluation of an acoustic measurement.

4. The communication system according to claim 3, **characterised in that** the field strength of the transmission channel of the microphone device (1) can be measured by the communication station (2) and/or a loudspeaker device (3, 4, 5, 6) and/or further mobile parts (7, 8).

5. The communication system according to either one of claims 3 and 4, **characterised in that** spatial vicinity can be detected by an overshoot of a predefined field-strength value.

6. The communication system according to any one of the preceding claims, **characterised in that** the communication system (2) comprises a control device or evaluation device which decides on the selection of the loudspeaker devices (3, 4, 5, 6) and which is arranged centrally or in a decentralised manner in a central communication/base station (2) or in any individual loudspeaker device (3, 4, 5, 6).

7. The communication system according to claim 6, **characterised in that**, by means of the control device or evaluation device, the selection of the loudspeaker devices (3, 4, 5, 6) can be made on the basis of transmittable measurement values of measuring devices disposed in the communication system, wherein at least one loudspeaker device (3, 4, 5, 6) and/or at least one mobile part (7, 8) and/or at least one microphone device (1) can be used as measuring device.

8. The communication system according to any one of the preceding claims, **characterised in that** the reproduction level of the return channel at the loudspeaker device (3, 4, 5, 6) can be automatically adapted depending on the spatial vicinity of the microphone device (1) relative to loudspeaker device (3, 4, 5, 6).

9. The communication system according to any one of the preceding claims, **characterised in that** the microphone device (1) has both the property of a cordless microphone and of a loudspeaker for reproduction of a return channel.

10. The communication system according to claim 9, **characterised in that** it comprises a control device or evaluation device which, for the situation in which no spatial vicinity has been established for any loudspeaker device (3, 4, 5, 6), causes the loudspeaker at the microphone device (1) to be at least temporarily activated.

11. A method in a communication system, wherein the communication system has a preferably central communication station (2), which can establish communication channels between a plurality of subscribers or at least one subscriber and a communication network, wherein each communication channel consists of a outward channel and a return channel, wherein the communication system also comprises at least one microphone device (1), which is cordless, wherein the microphone device (1) can set up a transmission channel to the communication station (2) for transmission of the outward channel, and wherein the communication system comprises a plurality of loudspeaker devices (3, 4, 5, 6) for reproduction of a return channel, **characterised in that** the return channel is reproduced simultaneously via a selection of loudspeaker devices (3, 4, 5, 6), wherein the selection (3, 4) comprises only those loudspeaker devices (3, 4, 5, 6) which are disposed in the spatial vicinity of the microphone device (1).

12. The method according to claim 11, **characterised in that** the reproduction level of the return channel is raised with increasing distance of the microphone device (1) from the loudspeaker device (3, 4, 5, 6).

13. The method according to claim 11, **characterised in that** the reproduction level of the return channel is reduced with decreasing distance of the microphone device (1) from the loudspeaker device (3, 4, 5, 6).

14. The method according to any one of claims 11 to 13, **characterised in that**
1. the return channel is reproduced in a first phase via a first loudspeaker device (3, 4, 5, 5),
2. as the microphone device (1) approaches a second loudspeaker device (3, 4, 5, 6), this is also activated in a second phase, such that the return channel can be perceived from both loudspeaker devices (3, 4, 5, 6) between the two loudspeaker devices (3, 4, 5, 6),
3. with continued movement in the direction of the second loudspeaker device (3, 4, 5, 6), the return channel is no longer reproduced via the first loudspeaker device (3, 4, 5, 6), which can no longer be perceived or at the least can only be perceived to a poorer extent.

15. The method according to any one of claims 11 to 14, **characterised in that** the measurement of the field strength with which the transmission channel of the microphone device (1) can be received is used in order to regulate the reproduction level of the return channel.

## Revendications

1. Système de communication, présentant une station de communication (2) de préférence centrale, laquelle peut établir des canaux de communication entre plusieurs participants ou au moins un participant et un réseau de communication, où un canal de communication est respectivement constitué d'un canal aller et d'un canal retour, présentant au moins un dispositif de microphone (1) qui est sans fil, où
le dispositif de microphone peut établir un canal d'émission vers la station de communication (2) pour la transmission du canal aller et présentant plusieurs dispositifs de haut-parleur (3, 4, 5, 6) pour la reproduction d'un canal retour,
**caractérisé en ce que**
le canal retour peut être reproduit simultanément par l'intermédiaire d'une sélection de dispositifs de haut-parleur (3, 4, 5, 6), où la sélection (3, 4) ne comprend que les dispositifs de haut-parleur qui se trouvent à proximité géographique du dispositif de microphone (1).

2. Système de communication selon la revendication 1,
**caractérisé en ce que** pour empêcher qu'aucun dispositif de haut-parleur (3, 4, 5, 6) se trouvant dans le système de communication ne reproduise le canal retour
a) la sélection présente au moins un dispositif de haut-parleur (3, 4, 5, 6) associé de manière normative au dispositif de microphone (1),
ou
b) le dispositif de microphone (1) est conçu pour la transmission d'informations dans son canal aller, à partir desquelles la sélection d'au moins un dispositif de haut-parleur (3, 4, 5, 6) est mise en évidence ou peut être déduite,
et/ou
c) pour la sélection d'au moins un dispositif de haut-parleur (3, 4, 5, 6) dans la station de communication (2), au moins l'adresse d'un dispositif de haut-parleur (3, 4, 5, 6) peut être déduite de manière relative à partir de l'adresse du dispositif de microphone (1),
et/ou
d) la sélection d'au moins un dispositif de haut-parleur (3, 4, 5, 6) dans la station de communication (2) est donnée par l'association fixe d'au moins un dispositif de haut-parleur (3, 4, 5, 6) à un identifiant individuel du dispositif de microphone (1), par exemple, à l'identité IPUI ou à un numéro de participant.

3. Système de communication selon l'une des revendications précédentes, **caractérisé en ce que** la proximité géographique peut être détectée par une mesure d'intensité de champ et/ou peut être détectée par l'exploitation d'une mesure acoustique.

4. Système de communication selon la revendication 3, **caractérisé en ce que** l'intensité de champ du canal émetteur du dispositif de microphone (1) peut être mesurée par la station de communication (2) et/ou un dispositif de haut-parleur (3, 4, 5, 6) et/ou d'autres composants mobiles (7, 8).

5. Système de communication selon les revendications 3 ou 4, **caractérisé en ce que** la proximité géographique peut être détectée par un dépassement d'une valeur d'intensité de champ prédéfinie.

6. Système de communication selon l'une des revendications précédentes, **caractérisé en ce que** le système de communication (2) présente un dispositif de contrôle ou un dispositif d'évaluation, lequel choisit le dispositif de haut-parleur (3, 4, 5, 6), lequel est disposé de manière centrale ou non centrale dans une station de communication / de base centrale (2) ou dans chaque dispositif de haut-parleur (3, 4, 5, 6) individuel.

7. Système de communication selon la revendication 6, **caractérisé en ce que,** par le dispositif de contrôle ou le dispositif d'évaluation, la sélection des dispositifs de haut-parleur (3, 4, 5, 6) peut être faite à l'aide de valeurs de mesure pouvant être transmises par des dispositifs de mesure se trouvant dans le système de communication, où, en tant que dispositif de mesure, au moins un dispositif de haut-parleur (3, 4, 5, 6), et/ou au moins un composant mobile (7, 8), et/ou au moins un dispositif de microphone (1), peuvent être employés.

8. Système de communication selon l'une des revendications précédentes, **caractérisé en ce que** le niveau de reproduction du canal retour sur le dispositif de haut-parleur (3, 4, 5, 6) peut être réglé automatiquement en fonction de la proximité géographique du dispositif de microphone (1) par rapport au dispositif de haut-parleur (3, 4, 5, 6).

9. Système de communication selon l'une des revendications précédentes, **caractérisé en ce que** le dispositif de microphone (1) présente la caractéristique d'un microphone sans fil et également celle d'un haut-parleur pour la reproduction d'un canal retour.

10. Système de communication selon la revendication 9,
**caractérisé en ce qu**'il présente un dispositif de contrôle ou un dispositif d'évaluation, qui fait en sorte que, dans le cas où aucune proximité géographique n'est constaté pour aucun dispositif de haut-parleur (3, 4, 5, 6), le haut-parleur est activé au moins de manière transitoire sur le dispositif de microphone (1).

11. Procédé dans un système de communication, où le système de communication présente de préférence une station de communication (2) centrale, laquelle peut établir des canaux de communication entre plusieurs participants ou au moins un participant et un réseau de communication, où un canal de communication est constitué respectivement d'un canal aller et d'un canal retour, où le système de communication présente en outre au moins un dispositif de microphone (1) qui est sans fil,
où le dispositif de microphone (1) peut établir un canal émetteur vers la station de communication (2) pour la transmission du canal aller et où le système de communication présente plusieurs dispositifs de haut-parleur (3, 4, 5, 6) pour la reproduction d'un canal retour,
**caractérisé en ce que**
le canal retour est reproduit simultanément sur une sélection de dispositifs de haut-parleur (3, 4, 5, 6), où la sélection (3, 4) comprend uniquement les dispositifs de haut-parleur (3, 4, 5, 6) qui se trouvent à proximité géographique du dispositif de microphone (1).

12. Procédé selon la revendication 11, **caractérisé en ce qu**'avec une distance croissante du dispositif de microphone (1) par rapport au dispositif de haut-parleur (3, 4, 5, 6), le niveau de reproduction du canal retour est augmenté.

13. Procédé selon la revendication 11, **caractérisé en ce qu**'avec une distance décroissante du dispositif de microphone (1) par rapport au dispositif de haut-parleur (3, 4, 5, 6), le niveau de reproduction du canal retour est diminué.

14. Procédé selon l'une des revendications 11 à 13, **caractérisé en ce que**
1. le canal retour est reproduit dans une première phase par l'intermédiaire d'un premier dispositif de haut-parleur (3, 4, 5, 6),
2. lors du rapprochement du dispositif de microphone (1) vers un deuxième dispositif de haut-parleur (3, 4, 5, 6), celui-ci est également activé dans une deuxième phase, de sorte que le canal retour est perceptible à partir des deux dispositifs de haut-parleur (3, 4, 5, 6) entre les deux dispositifs de haut-parleur (3, 4, 5, 6),
3. pour un autre déplacement en direction du deuxième dispositif de haut-parleur (3, 4, 5, 6), le canal retour n'est plus reproduit, ou au moins plus difficilement, par le premier dispositif de haut-parleur (3, 4, 5, 6) perceptible.

15. Procédé selon l'une des revendications 11 à 14, **caractérisé en ce que** la mesure de l'intensité de champ, avec laquelle le canal émetteur du dispositif de microphone (1) peut être réceptionnée est utilisée pour réguler le niveau de reproduction du canal retour.
